# EUROPÄISCHE PATENTSCHRIFT

(11) **EP 1 586 769 B1**
(45) Veröffentlichungstag und Bekanntmachung des Hinweises auf die Patenterteilung: **03.12.2014**
(21) Anmeldenummer: 04016782.7
(22) Anmeldetag: 16.07.2004
(51) Int. Cl.: F03D 9/00, H02K 1/20, H02K 9/04, H02K 7/18

(54) **Turmkopf einer Windenergieanlage**
Nacelle on a wind turbine mast
Nacelle d'éolienne

(30) Priorität: 16.04.2004 DE 102004018758
(43) Veröffentlichungstag der Anmeldung: 19.10.2005
(60) Teilanmeldung: 13163123.6
(73) Patentinhaber: VENSYS Energy AG, 66539 Neunkirchen (DE)
(72) Erfinder: Klinger, Friedrich, Prof. Dr.-Ing., 66119 Saarbrücken (DE)
(74) Vertreter: Bernhardt, Reinhold

(56) Entgegenhaltungen:
- EP-A2- 1 204 193
- WO-A1-01/21956
- DE-A1- 10 000 370
- DE-A1- 10 018 642
- DE-A1- 19 919 040

## Beschreibung

Die Erfindung betrifft einen Turmkopf einer Windenergieanlage, mit einem ohne Zwischenschaltung eines Getriebes durch den Rotor der Windenergieanlage angetriebenen Generator und Einrichtungen zur Leitung eines von dem Generator Verlustwärme abführenden Kühlmittelstroms, wobei das Ständerpaket des Generators einen oder mehrere, den Kühlmittelstrom durch das Ständerpaket hindurch leitende Kanäle aufweist und die Einrichtungen zur Leitung des Kühlmittelstroms einen geschlossenen, ausschließlich innerhalb des Turmkopfs angeordneten Kühlmittelkreislauf aufweisen, in dem ein Wärmetauscher vorgesehen ist.

Windenergieanlagen sollen bei möglichst geringem Gewicht und geringen Abmessungen des im Turmkopf untergebrachten Generators möglichst hohe elektrische Leistungen erreichen. Diese Forderung nach hoher Leistungsdichte macht eine wirksamere Kühlung der Generatoren erforderlich, wie dies z.B. in der DE 196 36 591 A1 des Anmelders zum Ausdruck kommt.

Ein Turmkopf der eingangs genannten Art geht aus der WO 01/21956 A1 hervor. Durch ein Ständerpaket sind Kühlleitungen für Kühlflüssigkeit geführt, die mittels Luftzirkulation über einen Wärmetauscher gekühlt wird, der in einem in dem Turmkopf zur Kühlung des Wärmetauschers vorgesehenen Luftkanal angeordnet ist.

Wie aus der EP 1 200 733 B1 hervorgeht, wird herkömmlich durch angesaugte Außenluft gekühlt, welche den Generator um- und durchströmt und Wärme nach außen abführt. Dabei kommt es durch Feuchtigkeit und Salzgehalt der Außenluft zu verstärkter Korrosion und damit einer Beeinträchtigung der Lebensdauer der Generatoren. Zur Lösung dieses Problems schlägt die EP 1 200 733 B1 vor, einen Kühlkreislauf innerhalb der Windenergieanlage zu bilden, welcher nur Innenluft verwendet, wobei die abzuführende Wärme über die Turmwand oder/und die Wand des Turmkopfs nach außen abgeführt wird.

Der vorliegenden Erfindung liegt die Aufgabe zugrunde, einen neuen Turmkopf zu schaffen, welcher eine weitere Erhöhung der Leistungsfähigkeit und Verbesserung der Dauerhaltbarkeit von Windkraftanlagen ermöglicht.

Diese Aufgabe wird gemäß den Merkmalen des Anspruchs 1 gelöst.

Der Wärmetauscher gibt Wärme aus dem Kühlmittelkreislauf an den Wärmetauscher durchströmende Außenluft ab. Da der Wärmetauscher nach außen vorsteht, kann die Außenluft ungehindert in ihn eintreten.

Die Kühlungsschlitze nach der Erfindung ermöglichen eine intensivere Kühlung, so dass eine hohe Leistungsdichte, d.h. hohe elektrische Leistung bei geringen Abmessungen und geringem Gewicht des Generators, erreicht werden kann. Insbesondere lässt sich eine gleichmäßige Temperaturverteilung im Ständerpaket und in den Ständerwicklungen einschließlich der Wickelköpfe erreichen. Für die Leistungsdichte von Generatoren maßgebende Kennzahlen, wie Esson-Zahl oder der Drehschub, der herkömmlich bei 25 bis 30 kN/m² liegt, lassen sich verdoppeln.

Vorzugsweise erstreckt sich als Kanal wenigstens ein Schlitz in Umfangsrichtung sowie radial zur Drehachse des Läufers durch das Ständerpaket hindurch und ist zum Luftspalt zwischen Ständerpaket und Läufer hin offen. Ein Kühlmittelstrom, vorzugsweise Kühlluftstrom, lässt sich so unter intensiver Kühlung des Ständers an den Wickelköpfen der Ständerwicklung vorbei in den Luftspalt und vom Luftspalt in den Schlitz oder umgekehrt leiten. Vorzugsweise umströmt der Kühlmittelstrom dabei die Wickelköpfe.

Vorzugsweise verlaufen mehrere, sich in Umfangsrichtung des Ständerpakets und radial erstreckende, axial im Abstand angeordnete Schlitze, zweckmäßig zueinander parallel.

Bei dem Generator handelt es sich vorzugsweise um einen vielpoligen Synchrongenerator mit Außen- oder Innenläufer, wobei der Läufer ohne Zwischenschaltung eines Getriebes starr mit dem Rotor der Windenergieanlage verbunden ist. Zweckmäßig bildet der Läufer einen Abschnitt der äußeren Oberfläche des Turmkopfs, so dass er unmittelbar von Außenluft umströmt wird, was ferner zur Kühlung des Generators beiträgt und die Stärke des erforderlichen Kühlmittelstroms vorteilhaft weiter herabsetzt.

Vorzugsweise stellen die Schlitze eine Strömungsverbindung zwischen einem äußeren und einem inneren Strömungsraum her, wobei der äußere Strömungsraum zwischen einer das Ständerpaket und den Rotor der Windenergieanlage haltenden Tragstruktur und einer Außenwand des Turmkopfs und der innere Strömungsraum innerhalb der Tragstruktur gebildet ist.

In einer weiteren Ausführungsform der Erfindung bildet die Tragstruktur einen außen durch das Ständerpaket begrenzten Ringraum, welcher in Strömungsverbindung mit dem Innenraum eines zur Drehachse des Rotors der Windenergieanlage konzentrischen Rohrabschnitts der Tragstruktur steht. Der Kühlmittelstrom kann so aus dem äußeren Strömungsraum durch die Schlitze im Ständerpaket hindurch in den Ringraum und von dort in den übrigen, durch die Tragstruktur gebildeten inneren Strömungsraum treten.

In weiterer Ausgestaltung der Erfindung sind Einrichtungen zur Leitung des Kühlmittelstroms derart vorgesehen, dass der Kühlmittelstrom auf beiden Seiten des Ständerpakets in den Luftspalt zwischen Ständerpaket und Läufer eintreten kann. Somit ist eine gleichmäßige Abkühlung des Ständers, insbesondere der Wickelköpfe, gesichert.

Als solche Leitungseinrichtungen kommen den genannten Ringraum durchquerende Strömungskanäle in Betracht, die in einen weiteren Ringraum führen, der durch die genannte Tragstruktur den Läufer und eine den Rotor mit dem Läufer verbindende weitere Tragstruktur begrenzt ist. Ausführungsformen mit solchen Strömungskanälen kommen insbesondere dann in Betracht, wenn zur Lagerung des Rotors ein einziges, am freien Ende des genannten Rohrabschnitts der Tragstruktur angeordnetes Lager verwendet wird, welches Drehmomente abtragen kann. Die weitere Tragstruktur kann dann durch eine Stirnwand gebildet sein, welche ringartig von der Nabe des Rotors vorsteht und eine Außenrandabwinklung aufweist, die eine Tragstruktur für die Magnete des Läufers bildet.

In weiterer Ausgestaltung der Erfindung ist in dem Kühlkreislauf wenigstens ein das Kühlmittel im Umlauf haltendes Lüfterrad vorgesehen.

In einer weiteren bevorzugten Ausführungsform der Erfindung sind zwei im Abstand zueinander angeordnete Wärmetauscher vorgesehen, wobei der Kühlmittelstrom des Kühlkreislaufs aus einem Zwischenraum zwischen den Wärmetauschereinheiten in die Wärmetauscher in entgegengesetzten Richtungen eintritt bzw. aus den Wärmetauschern in den Zwischenraum hinein austritt.

In weiterer Ausgestaltung der Erfindung weist der Kühlmittelkreislauf einen parallelen Zweig zur Kühlung einer im Turmkopf untergebrachten Steuerelektronik auf. Alternativ könnte die Steuerelektronik auch seriell zum Generator in dem Kreislauf angeordnet sein.

Der Turmkopf kann ferner eine Pump-/Filtereinrichtung aufweisen, die den Innenraum des Turmkopfs unter Überdruck setzt. Am Spalt zwischen einem Außenläufer und der Außenwand des Turmkopfs kann so keine Außenluft in den Turmkopf eintreten. Die Pumpeinrichtung kann mit einer Filtereinrichtung kombiniert sein und aus einem an den Luftspalt angrenzenden Ringraum Luft ansaugen. Auf diese Weise lässt sich der Anteil von außen angesaugter, ggf. feuchter oder salzhaltiger Luft auf ein Minimum reduzieren.

Zweckmäßigerweise ist die Geometrie des Kanals bzw. der Kanäle der Verteiler der Wärmeerzeugung innerhalb des Ständerpakets derart angepasst, dass durch den Kühlmittelstrom eine homogene Temperaturverteilung im Ständerpaket erreicht wird.

Vorzugsweise variiert die Weite, Anzahl und der Abstand zwischen den radialen Schlitzen derart, dass eine homogene Temperaturverteilung im Ständerpaket erreicht wird.

Die Erfindung soll nun anhand eines Ausführungsbeispiels und der beiliegenden, sich auf dieses Ausführungsbeispiel beziehenden Zeichnungen näher erläutert werden. Es zeigen:
- Fig. 1: einen erfindungsgemäßen Turmkopf einer Windenergieanlage in einer geschnittenen Seitenansicht,
- Fig. 2: Teile des Turmkopfs von Fig. 1 in einer geschnittenen Rückansicht,
- Fig. 3: eine weitere Teildarstellung des Turmkopfs von Fig. 1 in perspektivischer Ansicht,

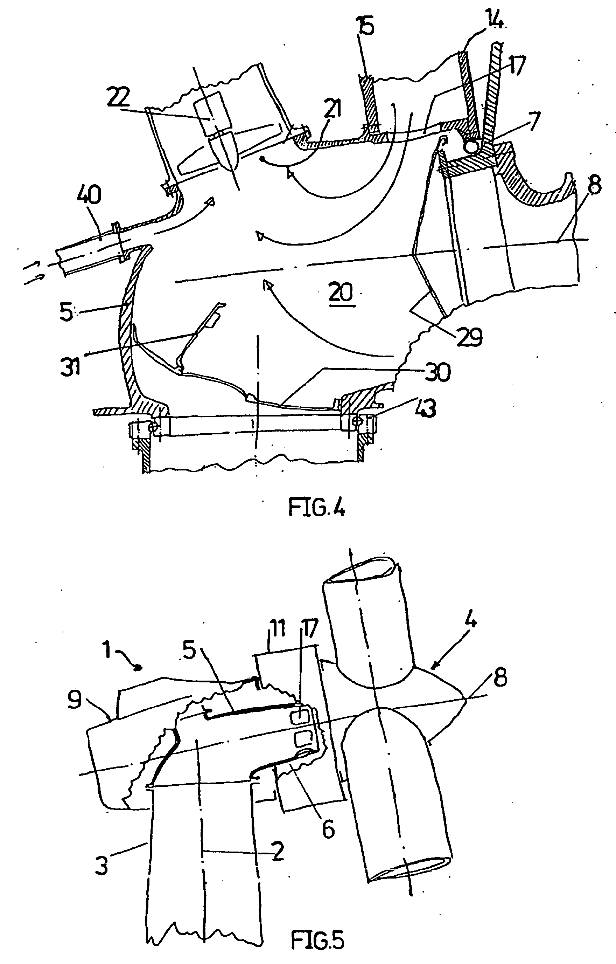

- Fig. 4: einen Ausschnitt aus der Schnittansicht von Fig. 1,
- Fig. 5: eine teilweise geschnittene Seitenansicht des Turmkopfs von Fig. 1, welche nur die Hauptbestandteile des Turmkopfs zeigt,
- Fig. 6: eine geschnittene Teilansicht eines Turmkopfs gemäß einem zweiten Ausführungsbeispiel für die vorliegende Erfindung, und
- Fig. 7: eine geschnittene Teilansicht des Turmkopfs von Fig. 6 in perspektivischer Darstellung.

Ein Turmkopf 1 einer Windenergieanlage ist um eine vertikale Achse 2 drehbar auf einem Turm 3 gelagert, so dass sich die Lage eines am Turmkopf angebrachten Rotors 4 an die jeweilige Windrichtung anpassen lässt.

Zur Lagerung des Rotors dient ein einziges, zur Aufnahme von Drehmomenten geeignetes Drehlager 7, das am freien Ende eines Rohrabschnitts 6 einer Tragstruktur 5 des Turmkopfs angeordnet ist. Der Turmkopf ist über diese Tragstruktur 5 und ein Lager 43 mit dem Turm verbunden.

Die Tragstruktur 5 umgibt ein Gehäuse, das eine im Abstand zu der Tragstruktur 5 angeordnete Außenwand 9 des Turmkopfs bildet.

Der Rotor 4 ist ohne Zwischenschaltung eines Getriebes über eine Stirnwand 10 starr mit einem Permanentmagnete 42 aufweisenden Außenläufer 11 eines vielpoligen Synchrongenerators verbunden.

Ein von dem Außenläufer 11 durch einen Luftspalt 41 getrenntes, ringförmiges Ständerpaket 12 mit Wickelköpfen 13 ist auf zueinander im Abstand angeordneten, zu dem Rohrabschnitt 6 konzentrischen Ringwänden 14 und 15, welche Teile der Tragstruktur 5 bilden, gehalten. Ein zwischen den Ringwänden 14 und 15 gebildeter Ringraum 16 steht über eine Anordnung um den Umfang des Rohrabschnitts 6 verteilter Öffnungen 17 in Strömungsverbindung mit dem Innenraum des Rohrabschnitts 6.

Das Ständerpaket 12 weist in bezug auf die Drehachse 8 radiale Schlitze 18 auf, die sich in Umfangsrichtung des Ständerpakets erstrecken und zueinander parallel verlaufen. Die zueinander axial im Abstand angeordneten Schlitze 18 stellen eine Strömungsverbindung zwischen einem äußeren Strömungsraum 19 und einem inneren Strömungsraum 20 her, wobei der äußere Strömungsraum 19 zwischen der weitgehend durch das Gehäuse 9 gebildeten Außenwand des Turmkopfs und der Tragstruktur 5 und der innere Strömungsraum 20 durch die hohle Tragstruktur 5 gebildet ist. Die Schlitze könnten sich zwischen getrennten Blechpaketringteilen durchgehend über den gesamten Umfang des Ständers erstrecken. Zweckmäßig sind die Schlitze jedoch durch über den Umfang verteilte Abstandsstücke unterbrochen.

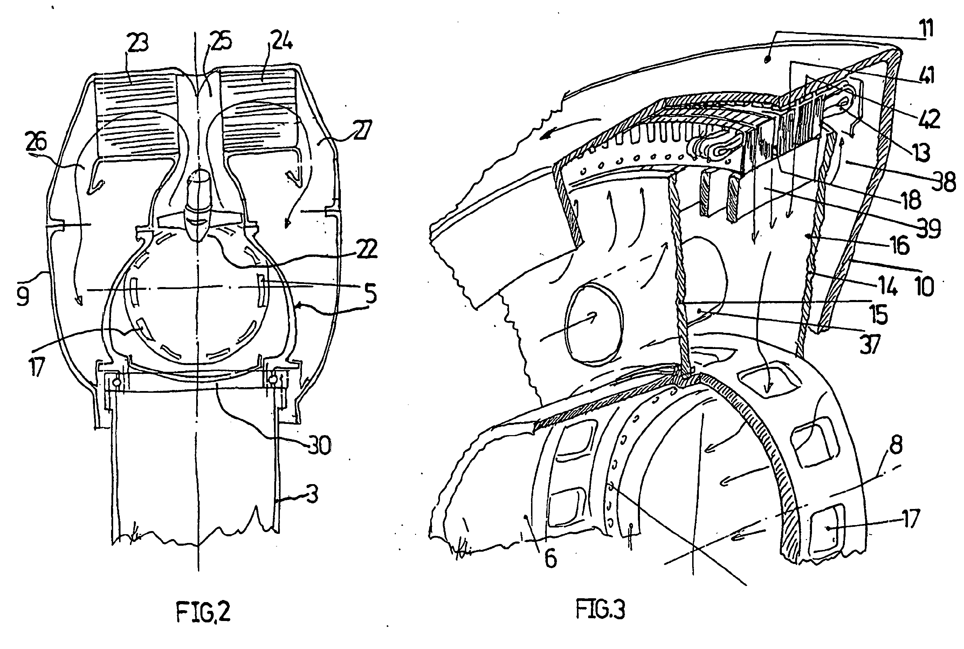

An einer Öffnung 21 der Tragstruktur 5 ist ein Lüfterrad 22 angeordnet, welchem eine Anordnung aus zwei, vom Turmkopf vorstehenden Wärmetauschern 23 und 24 nachgeordnet ist. Wie Fig. 2 erkennen lässt, strömt durch das Lüfterrad 22 aus dem inneren Strömungsraum 20 geförderte Luft in einen Zwischenraum 25 zwischen den Wärmetauschern und von dort durch die Wärmetauscher hindurch über jeweils einen Kanal 26 bzw. 27 in den äußeren Strömungsraum 19. Ein Lüfterrad 28 treibt Wärme abführende Außenluft durch die Wärmetauscher. Bei genügend tiefen Außentemperaturen kann der Lüfter 28 entfallen bzw. der vorhandene Lüfter stillgesetzt oder in seiner Leistung reduziert werden. Statt nur durch Wärmetauscher könnte auch eine Wärmeabgabe allein oder teilweise über die durch das Gehäuse 9 gebildete Außenwand des Turmkopfs erfolgen.

Der innere Strömungsraum ist durch Sperrwände 29 und 30 gegen den Rotor bzw. Turm abgedichtet, wobei die der Turmspitze zugewandte Sperrwand 30 eine Öffnungsklappe 31 aufweist.

Der innere Strömungsraum 20 steht ferner in Strömungsverbindung mit eine Leitung 40, die an ein Gehäuse 32, in welchem Leistungselektronik umfassende Baugruppen untergebracht sind, angeschlossen ist. Über Eingangsschlitze 33 kann Luft aus dem äußeren Strömungsraum 19 in das Gehäuse 32 eintreten.

Das Bezugszeichen 34 weist auf eine Pump-/Filtereinheit hin, welche Luft aus einem Ringraum 35 ansaugt. Der Rinraum 35 grenzt an einen zwischen der Wand des Gehäuses 9 und dem Läufer 11 gebildeten Spalt 36 an, wobei der Spalt 36 labyrinthartig abgedichtet ist. Die Pump-/Filtereinheit 34 erzeugt im Inneren des Turmkopfs einen Überdruck, der das Eintreten von Außenluft in den Turmkopf verhindert. Indem zur Überdruckerzeugung Luft aus dem Ringraum angesaugt wird, verringert sich der Anteil hierfür anzusaugender, ggf. mit Feuchtigkeit und Salz belasteter Außenluft.

Die Detaildarstellung von Fig. 3 zeigt, dass der Ringraum 16 von Kanälen 37 durchquert ist. Mehrere über den Umfang des Ringraums 16 verteilte solche Kanäle 37 stellen eine Strömungsverbindung zu einem weiteren Ringraum 38 her, welcher durch die Ringwand 14, die Stirnwand 10 und den Läufer 11 begrenzt ist.

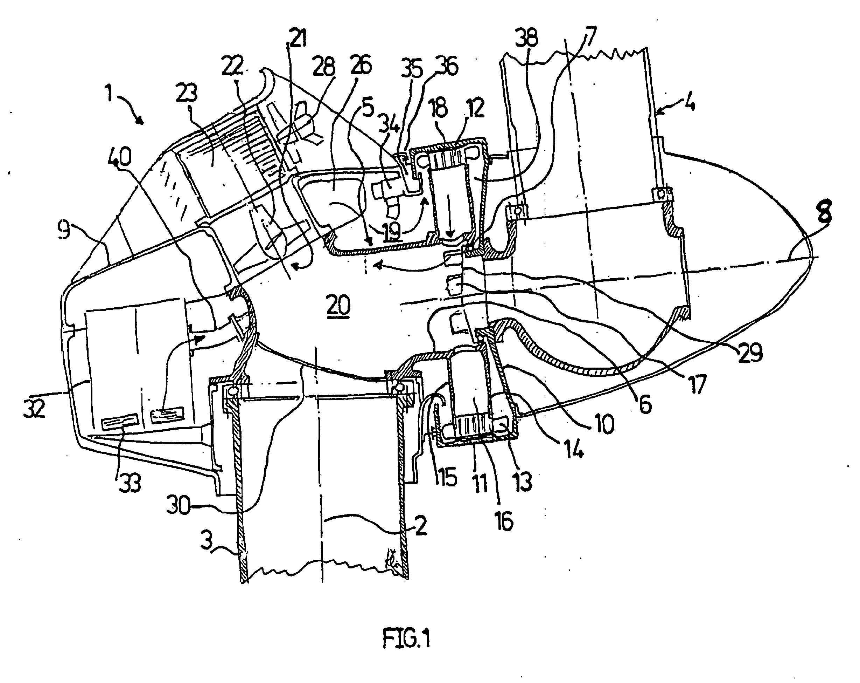

Wie Fig. 3 ferner erkennen lässt, ist das Ständerpaket 12 auf mit den Ringwänden 14 und 15 verbundenen Querträgerelementen 39 gehalten (in Fig. 1 nicht gezeigt).

Im Betrieb der Windenergieanlage erzeugt das Lüfterrad 22 im Innern des Turmkopfs 1 einen Kühlluftkreislauf. Kühle Luft aus den Wärmetauschern 23 und 24 strömt durch den äußeren Strömungsraum 19 und gelangt auf direktem Wege sowie indirekt über die Kanäle 37 und den Ringraum 38 auf beide Seiten des Ständerpakets 12. Die kühlende Luft streicht an den Wickelköpfen 13 vorbei und strömt dann von beiden Seiten her in den Luftspalt 41 zwischen dem Läufer 11 und dem Ständerpaket 12.

Durch das Lüfterrad 22 im inneren Strömungsraum 20 erzeugter Unterdruck lässt die Luft durch die Schlitze 18 hindurch in den Ringraum 16 und von dort über die Öffnungen 17 in den weiteren inneren Strömungsraum 20 hineinfließen. Das Lüfterrad 22 drückt die erwärmte Luft aus dem inneren Strömungsraum 20 dann in den Zwischenraum 25 zwischen den Wärmetauschern 23 und 24. Die in entgegengesetzten Richtungen durch die Wärmetauscher 23 und 24 fließende Luft tritt dann über die Kanäle 26 und 27 wieder in den teilweise ringförmigen äußeren Strömungsraum 19 ein, womit der Kreislauf geschlossen ist.

Das Lüfterrad 28 sorgt für die Durchströmung des Wärmetauschers mit Außenluft, an welche Wärme aus dem inneren Kühlmittelkreislauf übergeht.

Der unmittelbar einen Außenwandabschnitt des Turmkopfs bildende Läufer 11 wird durch vorbeiströmende Außenluft wirksam gekühlt.

Über die Leitung 40 angesaugte Luft tritt aus dem äußeren Strömungsraum 19 durch die Schlitze 33 hindurch in das Gehäuse 32 ein und kühlt die darin angeordneten Elektronikbaugruppen.

Der Filter in der Pump-/Filtereinheit 34 sorgt dafür, dass z.B. Feuchtigkeit und Salz aus angesaugter Außenluft entfernt werden.

Durch Variation der Drehgeschwindigkeit des Lüfterrads 22 und/oder des Lüfterrads 28 lässt sich die Temperatur des Generators in gewünschter Weise regeln.

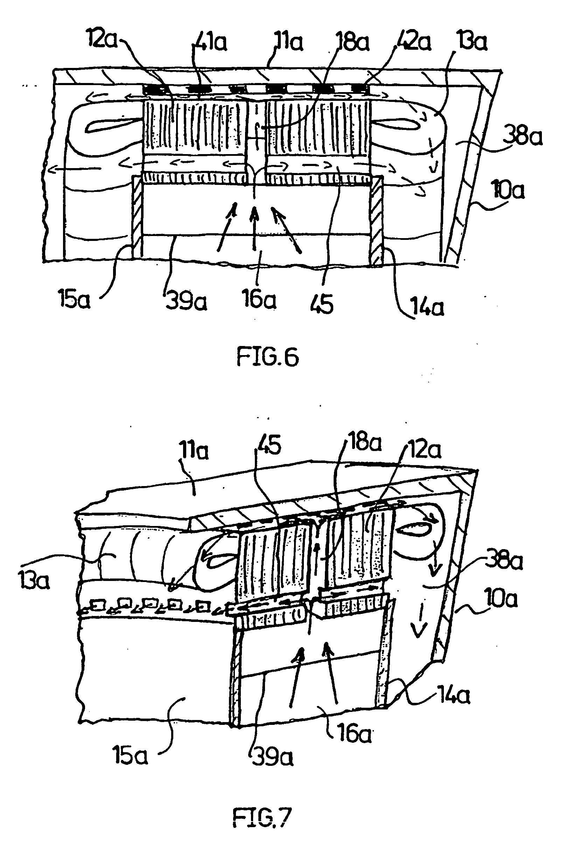

Es wird nun auf das Ausführungsbeispiel von Fig. 6 und 7 Bezug genommen, in denen gleiche oder gleichwirkende Teile mit derselben Bezugszahl wie in den vorangehenden Figuren bezeichnet sind, wobei der betreffenden Bezugszahl jeweils der Buchstabe a beigefügt ist.

Bei dem Ausführungsbeispiel von Fig. 6 und 7 wird ein Kühlmittelstrom durch einen in der Mitte eines Ständerpakets 12a angeordneten Schlitzes 18a radial durch das Ständerpaket hindurch in einen Luftspalt 41 a und von dem Schlitz 18a durch axiale Kanäle 45 auf beide Seiten des Ständerpakets 12a geleitet.

Der Kühlmittelstrom kann in diesem wie bei dem vorangehenden Ausführungsbeispiel von innen nach außen sowie in umgekehrter Richtung gefördert werden.

Die Kühlleistung der axialen Kühlkanäle 45 lässt sich durch eine Verrippung noch steigern.

Wie in den Fig. 6 und 7 anhand von Pfeilen dargestellt ist, umströmt aus dem Luftspalt 41 a austretendes Kühlmittel die Wickelköpfe 13a auf ihrer Oberseite, während aus den Kanälen 45 austretendes Kühlmittel die Unterseiten der Wickelköpfe 13a anströmt.

## Patentansprüche

1. Turmkopf (1) einer Windenergieanlage, mit einem ohne Zwischenschaltung eines Getriebes durch den Rotor (4) der Windenergieanlage angetriebenen Generator (11,12,13) und Einrichtungen zur Leitung eines von dem Generator Verlustwärme abführenden Kühlmittelstroms, wobei das Ständerpaket (12) des Generators (11,12,13) einen oder mehrere, den Kühlmittelstrom durch das Ständerpaket (12) hindurch leitende Kanäle (18;18a,45) aufweist und die Einrichtungen zur Leitung des Kühlmittelstroms einen geschlossenen, ausschließlich innerhalb des Turmkopfs (1) angeordneten Kühlmittelkreislauf umfassen, in dem ein Wärmetauscher (23,24) vorgesehen ist,
**dadurch gekennzeichnet,**
**dass** der Wärmetauscher (24,25) von der Außenwand des Turmkopfs (1) nach außen vorsteht.

2. Turmkopf nach Anspruch 1,
**dadurch gekennzeichnet,**
**dass** als Kanal wenigstens ein sich in Umfangsrichtung und radial zur Drehachse (8) des Läufers (11) durch das Ständerpaket (12) hindurch erstreckender und zum Luftspalt (41) zwischen Ständerpaket (12) und Läufer (11) hin öffnender Schlitz (18) vorgesehen ist.

3. Turmkopf nach Anspruch 1 oder 2,
**dadurch gekennzeichnet,**
**dass** der Läufer (11) des Generators (11-13) starr mit dem Rotor (4) der Windenergieanlage verbunden ist, wobei der Läufer (11) einen Abschnitt der äußeren Oberfläche des Turmkopfs (1) bildet.

4. Turmkopf nach einem der Ansprüche 1 bis 3,
**dadurch gekennzeichnet,**
**dass** die Schlitze (18) eine Strömungsverbindung zwischen einem äußeren (19) und einem inneren (20) Strömungsraum eines Kühlmittelkreislaufs bilden.

5. Turmkopf nach Anspruch 4,
**dadurch gekennzeichnet,**
**dass** der äußere Strömungsraum (19) durch eine das Ständerpaket (12) und den Rotor (4) der Windenergieanlage haltende Tragstruktur (5) und eine im Abstand zu der Tragstruktur (5) angeordnete Außenwand (9) des Turmkopfs (1) begrenzt und der innere Strömungsraum (20) innerhalb der Tragstruktur (5) gebildet ist.

6. Turmkopf nach Anspruch 5,
**dadurch gekennzeichnet,**
**dass** die Tragstruktur (5) einen außen durch das Ständerpaket (12) begrenzten Ringraum (16) bildet, der in Strömungsverbindung mit einem zur Drehachse (8) des Rotors (4) der Windenergieanlage konzentrischen Rohrabschnitt (6) der Tragstruktur (5) steht.

7. Turmkopf nach einem der Ansprüche 1 bis 6,
**dadurch gekennzeichnet,**
**dass** Einrichtungen zur Leitung des Kühlmittelstroms derart vorgesehen sind, dass der Kühlmittelstrom auf beiden Seiten des Ständerpakets (12) in den Luftspalt (41) zwischen dem Ständerpaket (12) und dem Läufer (11), vorzugsweise unter Umströmung der Wickelköpfe (13), eintreten oder aus dem Luftspalt (41) austreten kann.

8. Turmkopf nach Anspruch 7,
**dadurch gekennzeichnet,**
**dass** die Einrichtungen zur Leitung des Kühlmittelstroms wenigstens einen, den Ringraum (16) durchquerenden Strömungskanal (37) aufweisen.

9. Turmkopf nach eine der Ansprüche 1 bis 8,
**dadurch gekennzeichnet,**
**dass** in dem Kühlkreislauf wenigstens ein Lüfterrad (22) vorgesehen ist.

10. Turmkopf nach einem der Ansprüche 1 bis 9,
**dadurch gekennzeichnet,**
**dass** zwei im Abstand zueinander angeordnete Wärmetauscher (23,24) vorgesehen sind, wobei der Kühlmittelstrom des Kühlmittelkreislaufs über einen Zwischenraum (25) zwischen den Wärmetauschern (23,24) in die Wärmetauscher eintritt oder in den Zwischenraum (25) hinein aus den Wärmetauschern (23,24) austritt.

11. Turmkopf nach einem der Ansprüche 1 bis 10,
**dadurch gekennzeichnet,**
**dass** der Kühlmittelkreislauf einen parallelen Zweig zur Kühlung einer im Turmkopf (1) vorgesehenen Leistungselektronik aufweist.

12. Turmkopf nach einem der Ansprüche 1 bis 11,
**dadurch gekennzeichnet,**
**dass** eine den Turmkopf (1) unter Innendruck setzende Pumpeinrichtung (34) vorgesehen ist.

13. Turmkopf nach Anspruch 12,
**dadurch gekennzeichnet,**
**dass** die Pumpeinrichtung (34) mit einer Filtereinrichtung kombiniert ist und aus einem an den Spalt zwischen dem Läufer (11) und der Außenwand (9) des Turmkopfs (1) angrenzenden Ringraum (35) Luft ansaugt.

## Claims

1. Tower head (1) of a wind energy plant, having a generator (11, 12, 13) which, without the interposition of a transmission, is driven by the rotor (4) of the wind energy plant, and devices for channelling a cooling medium flow which extracts waste heat from the generator, wherein the stator stack (12) of the generator (11, 12, 13) has one or more passages (18; 18a, 45) which conduct the cooling medium flow through the stator stack (12), and the devices for channelling the cooling medium flow comprise a closed cooling medium circuit arranged exclusively within the tower head (1), in which circuit a heat exchanger (23, 24) is provided, **characterized in that** the heat exchanger (24, 25) projects outwardly from the outer wall of the tower head (1).

2. Tower head according to Claim 1, **characterized in that** the passage provided is at least one slot (18) which extends through the stator stack (12) in the circumferential direction and radially to the axis of rotation (8) of the rotor (11) and which opens towards the air gap (41) between the stator stack (12) and rotor (11).

3. Tower head according to Claim 1 or 2, **characterized in that** the rotor (11) of the generator (11-13) is rigidly connected to the rotor (4) of the wind energy plant, wherein the rotor (11) forms a portion of the outer surface of the tower head (1).

4. Tower head according to one of Claims 1 to 3, **characterized in that** the slots (18) form a flow connection between an outer (19) and an inner (20) flow space of a cooling medium circuit.

5. Tower head according to Claim 4, **characterized in that** the outer flow space (19) is delimited by a supporting structure (5), which holds the stator stack (12) and the rotor (4) of the wind energy plant, and an outer wall (9) of the tower head (1) that is arranged at a distance from the supporting structure (5), and the inner flow space (20) is formed within the supporting structure (5).

6. Tower head according to Claim 5, **characterized in that** the supporting structure (5) forms an annular space (16) which is delimited outwardly by the stator stack (12) and which is in flow connection with a tubular portion (6) of the supporting structure (5) that is concentric to the axis of rotation (8) of the rotor (4) of the wind energy plant.

7. Tower head according to one of Claims 1 to 6, **characterized in that** devices for channelling the cooling medium flow are provided such that the cooling medium flow can enter, on both sides of the stator stack (12), the air gap (41) between the stator stack (12) and the rotor (11), preferably while flowing around the end windings (13), or can exit the air gap (41).

8. Tower head according to Claim 7, **characterized in that** the devices for channelling the cooling medium flow have at least one flow passage (37) traversing the annular space (16).

9. Tower head according to one of Claims 1 to 8, **characterized in that** at least one fan wheel (22) is provided in the cooling circuit.

10. Tower head according to one of Claims 1 to 9, **characterized in that** two heat exchangers (23, 24) arranged at a distance from one another are provided, wherein the cooling medium flow of the cooling medium circuit enters the heat exchangers via an interspace (25) between the heat exchangers (23, 24) or exits the heat exchangers (23, 24) into the interspace (25).

11. Tower head according to one of Claims 1 to 10, **characterized in that** the cooling medium circuit has a parallel branch for cooling power electronics provided in the tower head (1).

12. Tower head according to one of Claims 1 to 11, **characterized in that** a pump device (34) which places the tower head (1) under internal pressure is provided.

13. Tower head according to Claim 12, **characterized in that** the pump device (34) is combined with a filter device and sucks in air from an annular space (35) adjoining the gap between the rotor (11) and the outer wall (9) of the tower head (1).

## Revendications

1. Nacelle (1) d'une éolienne, présentant un générateur (11, 12, 13) entraîné par le rotor (4) de l'éolienne sans interposition d'un dispositif d'entraînement et des dispositifs pour guider un flux de réfrigérant écartant la chaleur perdue du générateur, le stator (12) du générateur (11, 12, 13) présentant un ou plusieurs canaux (18 ; 18a, 45) guidant le flux de réfrigérant au travers de l'ensemble stator (12) et les dispositifs pour le guidage du flux de réfrigérant comprenant un circuit de réfrigérant fermé, disposé exclusivement à l'intérieur de la nacelle (1), dans lequel est disposé un échangeur thermique (23,24), **caractérisée en ce que** l'échangeur thermique (24, 25) dépasse vers l'extérieur à partir de la paroi externe de la nacelle (1).

2. Nacelle selon la revendication 1, **caractérisée en ce qu'**on a prévu comme canal au moins une fente (18) s'étendant dans le sens périphérique et radialement par rapport à l'axe de rotation (8) du rotor (11) au travers de l'ensemble stator (12) et ouverte vers l'entrefer (41) entre l'ensemble stator (12) et le rotor (11).

3. Nacelle selon la revendication 1 ou 2, **caractérisée en ce que** le rotor (11) du générateur (11-13) est relié de manière rigide au rotor (4) de l'éolienne, le rotor (11) formant une section de la surface externe de la nacelle (1).

4. Nacelle selon l'une quelconque des revendications 1 à 3, **caractérisée en ce que** les fentes (18) forment une communication d'écoulement entre une chambre d'écoulement externe (19) et une chambre d'écoulement interne (20) d'un circuit de réfrigérant.

5. Nacelle selon la revendication 4, **caractérisée en ce que** la chambre d'écoulement externe (19) est délimitée par une structure support (5) supportant l'ensemble stator (12) et le rotor (4) de l'éolienne et par une paroi externe (9) de la nacelle (1) disposée à une certaine distance de la structure support (5) et la chambre d'écoulement interne (20) est formée à l'intérieur de la structure support (5).

6. Nacelle selon la revendication 5, **caractérisée en ce que** la structure support (5) forme une chambre annulaire (16) délimitée à l'extérieur par l'ensemble stator (12) qui est en communication d'écoulement avec une section tubulaire (6) de la structure support (5), concentrique par rapport à l'axe de rotation (8) du rotor (4) de l'éolienne.

7. Nacelle selon l'une quelconque des revendications 1 à 6, **caractérisée en ce que** des dispositifs pour guider le flux de réfrigérant sont prévus de manière telle que le flux de réfrigérant peut entrer des deux côtés du stator (12) dans l'entrefer (41) entre l'ensemble stator (12) et le rotor (11), de préférence en s'écoulant autour des têtes de bobine (13) ou sortir de l'entrefer (41).

8. Nacelle selon la revendication 7, **caractérisée en ce que** les dispositifs pour guider le flux de réfrigérant présentent au moins un canal d'écoulement (37) traversant la chambre annulaire (16).

9. Nacelle selon l'une quelconque des revendications 1 à 8, **caractérisée en ce qu'**au moins une roue de ventilateur (22) est prévue dans le circuit de refroidissement.

10. Nacelle selon l'une quelconque des revendications 1 à 9, **caractérisée en ce qu'**elle présente deux échangeurs thermiques (23,24) disposés à une certaine distance l'un de l'autre, le flux de réfrigérant du circuit de réfrigérant entrant via une chambre intermédiaire (25) entre les échangeurs thermiques (23,24) dans l'échangeur thermique ou sortant des échangeurs thermiques (23,24) dans la chambre intermédiaire (25).

11. Nacelle selon l'une quelconque des revendications 1 à 10, **caractérisée en ce que** le circuit de refroidissement présente une déviation parallèle pour le refroidissement d'une électronique de puissance prévue dans la nacelle (1).

12. Nacelle selon l'une quelconque des revendications 1 à 11, **caractérisée en ce qu'**un dispositif de pompe (34) mettant la nacelle (1) sous une pression interne est prévu.

13. Nacelle selon la revendication 12, **caractérisée en ce que** le dispositif de pompe (34) est combiné à un dispositif de filtre et aspire de l'air à partir d'une chambre annulaire (35) adjacente à la fente entre le rotor (11) et la paroi externe (9) de la nacelle (1).
